# EUROPÄISCHE PATENTSCHRIFT

(11) **EP 0 525 429 B1**
(45) Veröffentlichungstag und Bekanntmachung des Hinweises auf die Patenterteilung: **01.03.1995**
(21) Anmeldenummer: 92111218.1
(22) Anmeldetag: 02.07.1992
(51) Int. Cl.: B01D 5/00, C21D 1/76

(54) **Vorrichtung zur Reinigung oder auch Aufbereitung von Gasen**
Device for purifying and/or regenerating gases
Dispositif pour la purification et/ou la régénération de gaz

(30) Priorität: 30.07.1991 DE 4125216
(43) Veröffentlichungstag der Anmeldung: 03.02.1993
(73) Patentinhaber: Linde Aktiengesellschaft, 65189 Wiesbaden (DE)
(72) Erfinder: Wandke, Ernst, Dr. Dipl.-Ing., W-8192 Geretsried (DE)
(74) Vertreter: Schaefer, Gerhard, Dr.

(56) Entgegenhaltungen:
- DE-A- 3 742 685
- FR-A- 924 496
- US-A- 2 584 785

## Beschreibung

Die Erfindung betrifft eine Vorrichtung zur Reinigung oder auch Aufbereitung von Gasen, z.B. und insbesondere der abfließenden Schutz- oder Reaktionsgase aus Wärmebehandlungen für Metalle, im wesentlichen durch Auskondensieren und/oder Ausfrieren unter Ausnutzung der Kälte eines Kälteträgers, bestehend aus einem geschlossenen Gehäuse mit einer Zuleitung und einer Ableitung für den Kälteträger (das Kältemedium).

Beispielsweise bei Wärmebehandlungen metallischer Werkstücke unter Gasatmosphären - z.B. dem Gasaufkohlen von Stahlteilen oder dem Glühen verschiedenster Metalle - werden Schutz- bzw. Reaktionsgase angewendet und in der Regel nach einmaligem Ofendurchlauf verworfen. Häufig werden diese Behandlungsgase - oder Mischungsanteile davon - zudem als tiefkalte Flüssiggase, vorrätig gehalten und bereitgestellt. Im Betrieb ist dann zunächst das Flüssiggas mit Umgebungswärme in einem sog. Luftwärmetauscher zu verdampfen, gegfs.mit weiteren Gasen zu mischen und schließlich der Wärmebehandlung zuzuführen (siehe hierzu z.B. HTM 35(1980) 6, S.284 bis 288, Artikel "Schutzgasatmosphäreren auf Stickstoffbasis"). Die im Flüssiggas enthaltene Kälte bleibt dabei also ungenutzt. Analoge Bedingungen, d.h. Nutzung eines tiefkalt als Flüssiggas bereitgestellten Mediums als Gas ohne Ausnutzung der "mitgelieferten" Kälte sind auch in anderen technischen Gebieten,z.B. beim Inertisieren von Anlagen, gegeben.

In all diesen Fällen werden also beträchtliche Gasmengen angewendet, um bestimmte Bedingungen aufrecht zu erhalten, und anschließend das Gas verworfen, obgleich das aus der Nutzung austretende Gas keine extremen Verunreinigungen aufweist. Dabei wäre in vielen Fällen - bei Durchführung einer entsprechenden Reinigung der Abgase - eine Weiter- oder Wiedervervendung dieser Gase möglich.

Dahingehende Vorschläge sind auch bereits gemacht worden, diese sind jedoch meist apparativ recht aufwendig und im Hinblick auf die Verfahrensweise kompliziert. Z.B. beinhaltet die diesem Gedanken auch folgende DE-OS 37 42 685 hierfür ebenfalls eine relativ aufwendige Lösung, die auf einer Gasreinigung durch zwei abwechslungsweise schaltbare Kondensatoren beruht, von denen sich jeweils einer im Gefrier- oder Kondensationsbetrieb befindet, während der zweite durch Erwärmung regeneriert wird, d.h.von den ausgefrorenen und auskondensierten Stoffen befreit wird. Dieses Verfahren mit zugehöriger Vorrichtung ist also ebenfalls mit beträchtlichem apparativem und regelungstechnischem Aufwand verbunden.

Die Aufgabenstellung vorliegender Erfindung besteht daher darin, eine Vorrichtung anzugeben, die eine Reinigung von Gasen mit vertretbarem Aufwand, mit gleichbleibender Wirksamkeit und vor allem möglichst unkomplizierter Betriebsweise zuläßt.

Diese Aufgabe wird erfindungsgemäß dadurch gelöst, daß in dem eingangs genannten, geschlossenen, durch Kälteträgerzufuhr kühlbaren Vorrichtungsgehäuse ein gegen das Gehäuse abgeschlossener Ringkanal 3 angeordnet ist, in dem ein mit seiner Außenform den Ringkanal ausfüllendes, endloses Gliederband 1 untergebracht ist,
wobei das Gliederband mit einem Antrieb gekoppelt ist, der es durch den Ringkanal vorwärts bewegt, und wobei wenigstens an einer Stelle am Ringkanal des Gliederbandes eine Schleuseneinrichtung angeordnet ist, die mit diesem gasdicht und zur Aufnahme von mit dem Gliederband geförderten Verunreinigungen geeignet in Verbindung steht, und dadurch, daß in den Ringkanal an unterschiedlichen Stellen ein Zufuhrkanal und ein Abfuhrkanal für das zu reinigende Gas münden.

Mit der erfindungsgemäßen Vorrichtung erfolgt die Gasreinigung in der Weise, daß dem im Gehäuse befindlichen, durch ein Kältemittel gekühlten Ringkanal das zu reinigende Gas zugeführt wird und dort aufgrund der Kühlung die Verunreinigungen ausgeforen oder auskondensiert werden. In besagtem Ringkanal kann das Gas trotz des dort eingebauten Gliederbandes fließen, da das Gliederband den Ringkanal nicht abdichtet. Zudem wird das Gas auch vom Gliederband gekühlt. Andererseits bewirkt das im Ringkanal durch den vorgesehenen Antrieb transportierte, den Ringkanal ausfüllende Gliederband, daß die sich durch die Abkühlung ausscheidenden, ausfrierenden oder auskondesierenden Verunreinigungen nicht im Ringkanal festsetzen können. Statt dessen werden die Verunreinigungen mit dem umlaufenden Gliederband zur daran angeschlossenen Schleuseneinrichtung transportiert und dort, beispielsweise durch Schwerkrafteinwirkung, aus dem grobmaschig gewählten Gliederband (lichte Weite vorzugsweise 3 - 10 mm) herausbefördert. Auf diese Weise erhält man also eine sich nicht zusetzende, eine gleichbleibende Reinigungsleistung aufweisende, mit gleichbleibenden Einstellparametern betreibbare Gasreinigungseinrichtung, die nach dem Ausfrier- und Kondensationsprinzip arbeitet.

Mit Vorteil ist die erfindungsgemäße Gasreinigungseinheit vertikal gestaltet, d.h. daß der im Gehäuse angeordnete, in sich geschlossene Ringkanal stehend im Gehäuse installiert ist, wobei die Schleuseneinrichtung am tiefsten Punkt des Ringkanals angeordnet ist und das Gliederband an dieser Stelle durch den Ringkanal nach unten nicht abgeschlossen ist und die mit dem Gliederband beförderten, ausgefrorenen und auskondensierten Verunreinigungen der Schwerkraft folgend in die Schleuseneinrichtung befördert werden, wobei das Ausbringen der Verunreinigungen aus dem Gliederband durch weitere Maßnahmen unterstützt erfolgen kann.

Auf diese Weise wird die Schwerkraft vorteilhaft für die Vorrichtung genutzt, denn alle ausgefrorenen oder auskondensierten Partikel oder Tropfen werden zum einen durch die Schwerkraft sowie durch die Transportbewegung zu der am tiefsten Punkt angeordneten Austragsschleuse befördert. Zum anderen erfolgt die Abtrennung von Abscheidungen vom Gliederband oberhalb der Austragsschleuse wesentlich durch die Schwerkraft und wird durch Vibrationen, die das Gliederband durch die Transportbewegung erfährt, unterstützt. Diese Abtrennung kann gegebenenfalls auch durch den Einsatz entsprechender Elemente, wie Vibratoren, die Erschütterungen auf das Gliederband ausüben, unterstützt werden.

Mit Vorteil wird als mit dem Ringkanal verbundene Schleuseneinrichtung eine Zellenradschleuse vorgesehen, die mit einer Kühlung ausgestattet ist. Eine Zellenradschleuse ist insbesondere für kontinuierlich zu betreibende Anlagen wegen ihrer kontiuierlichen Arbeitsweise vorteilhaft. Eine günstige Ausgestaltung der Vorrichtung besteht zudem darin, daß der Ringkanal der Vorrichtung im Querschnitt etwa rechteckförmig ausgebildet ist und an den schmalen Seiten des Rechteckquerschnitts Führungsschienen vorgesehen sind und als Gliederband ein im Querschnitt ebenfalls Rechteckform einnehmendes, seitlich führbares Gliederband, z.B. ein Drahtgeflechtgurt, verwendet wird.

Mit besonderen Vorteilen verbunden ist eine Detailausgestaltung der vorgeschlagenen Vorrichtung derart, daß das Gliederband aus in Längsrichtung gegeneinander verschiebaren Gliedern besteht und im Ringkanal ein im Vergleich zur Ringkanallänge um einige Glieder zu langes Gliederband eingesetzt ist, wobei durch die Anordnung des Antriebs etwa oberhalb der Austragsschleuse gerade dort die Umschaltung des Transports des Gliederbandes von Zug auf Druck erfolgt, was eine gegeneinander Verschiebung der einzelnen Gliederbandglieder zur Folge hat, derzufolge eine besonders wirksame Abreinigung des Gliederbandes ohne weitere Zusatzeinrichtungen bewirkt wird.

Anhand der Figuren soll die Erfindung im folgenden beispielhaft näher erläutert werden.

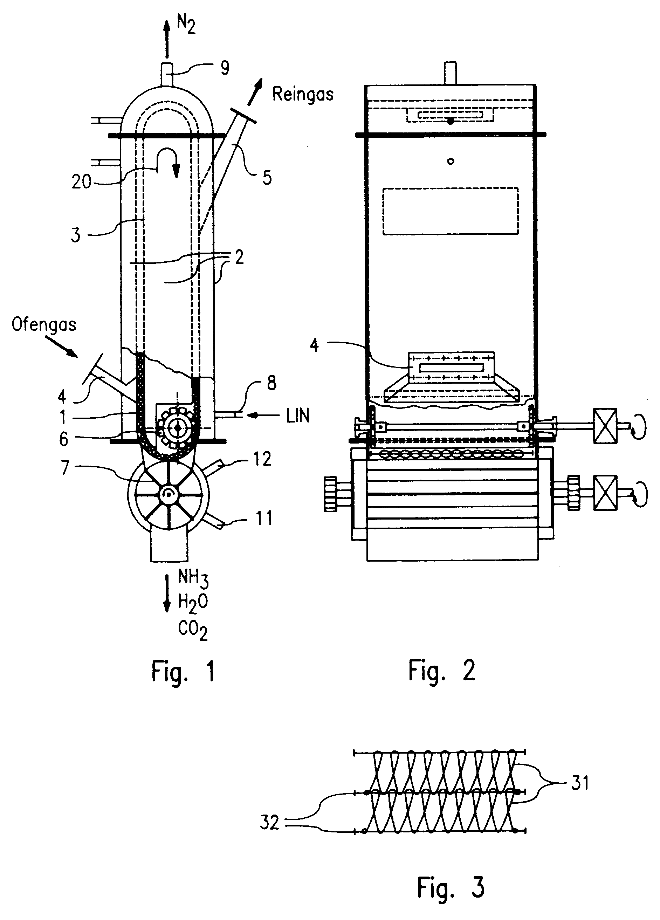

Die Figuren 1 und 2 zeigen hierzu eine entsprechende Vorrichtung (Außenabmessungen hier ca. 2m Höhe, 0.4 m Tiefe und 0.5 m Breite) in Seitenansicht (Fig.1) und Vorderansicht (Fig.2). Es ist ein Gehäuse 2 mit Zuleitung 8 und Ableitung 9 für das Kältemittel, hier Flüssigstickstoff, gezeigt, sowie ein im Gehäuse angeordneter, etwa parallel zu dessen Wänden und dazu beabstandet verlaufender, in sich geschlossener und gegen das Gehäuse dichter Ringkanal 3, mit darin enthaltenem und geführtem Gliederband 1. In den Ringkanal 3 mündet ein Zufuhrkanal 4 und ein Abfuhrkanal 5, zur Zu-und Ableitung von zu reinigendem Gas. Am unteren Umkehrpunkt des Gliederbandes ist ein Antrieb 6 zur Bewegung des Gliederbandes im Ringkanal angeordnet. Unterhalb des unteren Umkehrpunktes des Gliederbandes befindet sich als Schleuseneinrichtung 7 eine Zellenradschleuse, die über Leitungen 11, 12 durch Zuleitung von Kältemittel gekühlt werden kann.

Ausgangspunkt zur Darstellung der Erfindung soll im weiteren eine Nitrierwärmebehandlung sein, bei der ein Reaktionsgas unter Zugabe von NH₃ und N₂ zu einem Behandlungsofen gemäß

u NH3 + x N2 ---> z NH3 + y N2 + v H2

gebildet wird. Für eine Nitrierung sind z.B. stählerne Werkstücke im Regelfall mehrere Stunden in einer solchen Atmosphäre bei Temperaturen von ca. 550°C und unter einem Gasfluß von bspw. ca. 100 m³/h in einer zugehörigen Ofenanlage zu halten. Das ausfließende Gas besitzt dabei typischerweise etwa eine Zusammensetzung von
30 % NH3 / 44 % N2
21 % H2 / 4 % H₂O / 1 % CO2.

Beim austretenden Gas sind nun folgende Aspekte von Bedeutung: zum einen enthält dieses große Mengen an"wertvollem" Ammoniak, das auch nicht ohne weiteres an die Umwelt abgegeben werden darf, und zum anderen sind weitere, wieder nutzbare Gase wie Stickstoff und Wasserstoff enthalten, bei denen eine Weiter- oder Wiederverwendung insbesondere in der laufenden Nitrierung möglich wäre. Im Idealfall bedeutet dies, daß in dem hier vorliegenden Beispiel ca. 30 m³ Ammoniak pro Stunde. (ca. 23 kg Festmaterial) gewinnbar sind, das wiederum der Nitrierung oder anderen Anwendungen zugeführt werden könnte. Damit wären auch erhebliche Kosteneinsparungen erzielbar. Zudem sind 65 m³/h N₂+H₂ gewinnbar, die wiederum wenigsten in Teilen erneut der Nitrierung zugeführt werden könnten. Die Wiedergewinnung dieser Stoffe und Gase gelingt nun mit der erfindungsgemäßen Vorrichtung wie folgt:
Über den Zufuhrkanal 4 wird das zu reinigende Ofengas in die Vorrichtung eingebracht. Es fließt in den Ringkanal 3 ein und wird dort nach oben in Laufrichtung (siehe Pfeil 20) des im Ringkanal untergebrachten Gliederbandes 1, mit Vorzug ein Drahtgeflechtband, gelenkt. Das zu reinigende Gas durchläuft etwa die Hälfte bis 3/4 des im Gehäuse 2 geschlossen ausgebildeten Ringkanals 3 und wird dann über den Ableitungskanal 5 wieder aus dem Gehäuse und der Vorrichtung herausgeführt. In der Ringkanalstrecke wird das Gas einer massiven Abkühlung unterworfen, die dadurch zustande kommt, daß der Ringkanal 3 im Gehäuse 2 in seinem unteren Bereich vollständig von flüssigem Stickstoff (=LIN - Siedepkt.:-196°C), umgeben ist, welcher über die Zuleitung 8 dem Gehäuse 2 zugeführt wird. Im Gehäuseinnenraum verdampft der Flüssigstickstoff, ist im oberen Gehäusebereich bereits gasförmig und verläßt das Gehäuse über Ableitung 9. Er kann von dort bei Bedarf, da unvermischt, für weitere Nutzungen, z.B. zur Reaktionsgasbildung, abgezogen werden. Beim abfließenden, gasförmigen Stickstoff werden mit Vorteil Temperaturen zwischen - 80 und -140°C eingehalten, wobei dies durch geeignete Mengenzuleitung von Flüssigstickstoff über Leitung 8 bewerkstelligt wird.

Durch das auf diese Weise hergestellte, tiefe Temperaturniveau im Ringkanal 3 und Gehäuse 2 wird das Ofengas nach seinem Eintritt abrupt abgekühlt und daraus resultierend entsprechende Ofengasanteile sehr schnell ausgeschieden, weshalb zudem wenig Salzbildungs- und Lösungsprozesse stattfinden. Die sich entsprechend den angewandten Temperaturen und dem vorhandenen Gasgemisch ausscheidenden Stoffe, nämlich hier vor allem NH3 sowie kleine Anteile von CO2 und H₂O, werden in eis- oder schneeartiger Form an den Ringkanalwänden und dem Gliederband abgeschieden und mit der Transportbewegung des Bandes gegebenfalls von den Wänden abgekratzt und weiterbefördert. Schließlich gelangen die so transportierten Abscheidungen mit dem Drahtgeflechtband in den unteren Bereich des Ringkanals 3, wo unterhalb, in Richtung Schwerkraftwirkung, eine Zellenradschleuse 7 mit ihren offenen Schleusenkammern angeordnet ist. Das Band 1 ist in dieser Zone nach unten nicht verhüllt, wodurch durch die Schwerkraft und aufgrund der durch die Transportbewegung verursachten Vibrationen die mit dem Drahtgeflechtband mitgeführten eis- und schneeartigen Abscheidungen nach unten abfallen und in die oben befindlichen Zellen der sich gleichmäßig drehenden Zellenradschleuse gelangen. Die Zellenradschleuse wird dabei über die Zuleitung 11 und die Ableitung 12 durch Flüssigstickstoffzuleitung ebenfalls gekühlt. Das aus dem zu reinigenden Gas abgeschiedene Eis/Schneegemisch wird so aus der Vorrichtung ausgeschleust.

Im vorliegenden Beispiel bestehen die Abscheidungen überwiegend aus Ammoniak, das durch geeignete Erwärmung von CO2-Anteilen befreit werden kann. Wasseranteile lassen sich bei Bedarf z.B. durch eine der gezeigten Vorrichtung vorgeschaltete, auf Wasser gerichtete Auskondesation verringern oder durch eine geeignete Nachbehandlungen - Trocknung - entfernen. Im vorliegenden Beispiel wird jedenfalls weit überwiegend Ammoniak erhalten, das z.B. wieder in der durchzuführenden Nitrierung einsetzbar ist.

Zum Abtrennen der Ausfrierprodukte vom Gliederband 1 hat sich darüberhinaus insbesondere die folgende Detailgestaltung der Vorrichtung bewährt: das im Ringkanal 3 zu installierende Gliederband bzw. der Drahtgeflechtgurt wird mit einer Länge ausgestattet, die um einige Einzelglieder länger ist als die Ringkanallänge. Dies hat zur Folge, daß das Band 1 im Ringkanal nicht gespannt ist und demnach zwar in weiten Teilen des Ringkanals durch den Antrieb 6 und dessen Antriebsrad gezogen wird, jedoch genau nach dem Antriebsrad, und dieses ist unmittelbar vor und oberhalb der Schleuse 7 angeordnet, ein Zusammenschieben der einzelnen Glieder des Bandes gegeneinander erfolgt. Diese Bewegung ergibt eine zusätzliche, äußerst wirksame und ökonomisch günstige - weil ohne Zusatzenergie erfolgende - Abreinigungsbewegung für das Gliederband. Ein kurzes Stück nach dieser von ausgefrorenen Abscheidungen reinigenden Bewegung werden die Einzelglieder wieder auseinandergezogen und der Transport des Bandes erfolgt wieder durch Zugkraft.

Ein für eine erfindungsgemäße Gasreinigungsvorrichtung geeigneter Darahtgeflechtgurt ist schematisch in Fig.3 gezeigt. Er besteht aus quer zur Gurtrichtung liegenden, abgeflachten Drahtwendeln 31, die mit ihren Windungen ineinander geschoben und durch Querstäbe 32 miteinander verbunden sind. Ein solches Gliederband ist in Querrichtung steif, in Längsrichtung jedoch an alle Kurven anpaßbar. Ebenso sind die einzelnen Glieder bzw. Drahtwendeln gegeneinander verschiebbar und somit für die vorteilhafte Abreinigungsbewegung tauglich.

## Patentansprüche

1. Vorrichtung zur Reinigung oder auch Aufbereitung von Gasen, z.B. und insbesondere der abfließenden Schutz- oder Reaktionsgase aus Wärmebehandlungen für Metalle, im wesentlichen durch Auskondensieren und/oder Ausfrieren
unter Ausnutzung der Kälte eines Kälteträgers, bestehend aus einem geschlossenen Gehäuse (2) mit einer Zuleitung (8) und einer Ableitung (9) für den Kälteträger (das Kältemedium),
dadurch gekennzeichnet,
daß im Gehäuse (2) ein gegen das Gehäuse abgeschlossener Ringkanal (3) angeordnet ist, in dem ein den Ringkanal ausfüllendes, endloses Gliederband (1) untergebracht ist,
wobei das Gliederband mit einem Antrieb (6) gekoppelt ist, der es durch den Ringkanal vorwärts bewegt,
und wobei wenigstens an einer Stelle am Ringkanal des Gliederbandes eine Schleuseneinrichtung (7) angeordnet ist, die mit diesem gasdicht und zur Aufnahme von mit dem Gliederband (1) geförderten Verunreinigungen geeignet in Verbindung steht, und
dadurch, daß in den Ringkanal (3) ein Zufuhrkanal (4) und ein Abfuhrkanal (5) für das zu reinigende Gas münden, deren Stellen mindestens durch die Hälfte der Ringkanalstrecke in Laufrichtung (20) von einander getrennt liegen.

2. Vorrichtung nach Anspruch 1, dadurch gekennzeichnet, daß die gesamte Einheit vertikal gestaltet ist, d.h. daß der im Gehäuse angeordnete, in sich geschlossene Ringkanal (3) stehend im Gehäuse installiert ist, wobei die Schleuseneinrichtung am tiefsten Punkt des Ringkanals angeordnet ist
und das Gliederband an dieser Stelle durch den Ringkanal nach unten nicht abgeschlossen ist und die mit dem Gliederband beförderten, ausgefrorenen und somit die auskondensierten Verunreinigungen der Schwerkraft folgend in die Schleuseneinrichtung befördert werden.

3. Vorrichtung nach Anspruch 1 oder 2, dadurch gekennzeichnet, daß die mit dem Ringkanal verbundene Schleuseneinrichtung (7) eine Zellenradschleuse ist.

4. Vorrichtung nach einem der Ansprüche 1 bis 3, dadurch gekennzeichnet, daß der Ringkanal (3) im Gehäuse (2) im Querschnitt etwa rechteckfömig ist und an den schmalen Seiten des Rechteckquerschnitts Führungsschienen vorhanden sind und als Gliederband ein im Querschnitt ebenfalls Rechteckform einnehmendes, seitlich führbares Gliederband, insbesondere ein Drahtgeflechtgurt, eingesetzt ist.

5. Vorrichtung nach einem der Ansprüche 1 bis 4, dadurch gekennzeichnet, daß das Gliederband aus in längsrichtung gegeneinander verschiebaren Gliedern besteht und im Ringkanal (3) ein im Vergleich zur Ringkanallänge um einige Glieder zu langes Gliederband (1) eingesetzt ist, wobei der Antrieb etwa oberhalb der Austragsschleuse angeordnet ist.

## Claims

1. Device for cleaning or also preparing gases, for example and in particular the discharging shielding or reaction gases from heat treatments for metals, essentially by condensation and/or freezing using the cold of a refrigerant, consisting of a closed housing (2) with a feed line (8) and a discharge line (9) for the refrigerant (refrigerating medium), characterised in that the housing (2) contains an annular channel (3) which is closed in relation to the housing and accommodates an endless link belt (1) filling the annular channel, and the link belt is coupled with a drive (6) which moves it forwards through the annular channel, and at one point at least on the annular channel of the link belt there is a lock arrangement (7) which forms a gastight connection with this suitable to receive impurities conveyed with the link belt (1), and in that a delivery channel (4) and a discharge channel (5) for the gas to be cleaned debouch into the annular channel (3), the positions of which are separated from one another at least by half the length of the annular channel in the running direction (20).

2. Device according to claim 1, characterised in that the entire unit is arranged vertically, i.e. in that the self-contained annular channel (3) disposed in the housing is installed upright in the housing, and the lock arrangement is disposed at the lowest point of the annular channel and the link belt is not enclosed by the annular channel at the bottom at this point and the frozen and hence condensed impurities conveyed with the link belt are conveyed into the lock arrangement by gravity.

3. Device according to claim 1 or 2, characterised in that the lock arrangement (7) connected to the annular channel is a cell wheel lock.

4. Device according to one of claims 1 to 3, characterised in that the annular channel (3) in the housing (2) is substantially rectangular in cross-section and on the narrow sides of the rectangular cross-section there are guide rails and a laterally guidable link belt also adopting a rectangular form in cross-section, in particular a woven wire belt, is used as the link belt.

5. Device according to one of claims 1 to 4, characterised in that the link belt consists of links displaceable longitudinally in relation to one another and a link belt (1) which is a few links too long in comparison with the length of the annular channel is used in the annular channel (3), the drive being disposed substantially above the discharge lock.

## Revendications

1. Dispositif de purification ou également de régénération de gaz, par exemple et en particulier des gaz de protection ou de réaction se dégageant à la suite de traitements thermiques appliqués à des métaux, pour l'essentiel par séparation par condensation et/ou congélation en utilisant le froid d'un porteur de frigories, se composant d'un boîtier fermé (2) muni d'une conduite d'amenée (8) et d'une conduite d'évacuation (9) pour le porteur de frigories (le fluide froid), caractérisé en ce que dans le boîtier (2), est disposé un canal annulaire (3) fermé dans le boîtier et dans lequel est montée une bande coulissante sans fin (1) remplissant le canal annulaire, la bande coulissante étant accouplée à un moyen d'entraînement (6) qui la déplace en avant dans le canal annulaire et au moins en un emplacement du canal annulaire de la bande coulissante étant prévu un organe d'écluse (7) qui est en liaison avec la bande coulissante de façon étanche au gaz et qui est apte à recevoir les impuretés transportées par la bande coulissante (1), et en ce que débouche dans le canal annulaire (3) un canal d'amené (4) et un canal d'évacuation (5) pour le gaz à épurer et dont les emplacements sont séparés l'un de l'autre au moins par la moitié de l'étendue du canal annulaire dans la direction de déplacement (20).

2. Dispositif selon la revendication (1), caractérisé en ce que la totalité de l'unité est disposée verticalement, c'est à dire que le canal annulaire (3) disposé dans le boîtier et fermé sur lui-même est installé debout dans le boîtier, l'organe d'écluse étant disposé au point le plus bas du canal annulaire et en ce que la bande transporteuse en cet emplacement n'est pas obturée vers le bas par le canal annulaire et les impuretés transportées par la bande coulissante et séparées par congélation ainsi qu'également par condensation, sont ensuite transportées par gravité dans l'organe d'écluse.

3. Dispositif selon la revendication 1 ou 2, caractérisé en ce que l'organe d'écluse (7) relié au canal annulaire est une écluse à roue à cellules.

4. Dispositif selon l'une des revendications 1 à 3 caractérisé en ce que le canal annulaire (3) présente dans le boîtier (2) une forme de section transversale sensiblement rectangulaire, et en ce que, sur les faces étroites de la section transversale rectangulaire, sont prévus des rails de guidage, et en ce que l'on utilise comme bande coulissante, une bande coulissante susceptible d'être guidée latéralement et prenant en section transversale également une forme rectangulaire, en particulier une courroie en treillis métallique.

5. Dispositif selon l'une des revendications 1 à 4, caractérisé en ce que la bande coulissante se compose d'organes susceptibles de coulisser l'un par rapport à l'autre dans la direction longitudinale et en ce que, dans le canal annulaire (3), est montée une bande coulissante (1) trop longue de quelques organes par rapport à longueur du canal annulaire, l'entraînement étant disposé un peu au dessus de l'écluse d'extraction.
